# EUROPEAN PATENT APPLICATION

(11) **EP 4 173 951 A1**
(43) Date of publication of application: **03.05.2023**
(21) Application number: 22198163.2
(22) Date of filing: 27.09.2022
(51) Int. Cl.: B64D 11/00, B64D 11/02, B64D 11/04, B65F 1/00, B65F 1/06, B65F 1/14

(54) **AIRCRAFT GALLEY WASTE COMPARTMENT BIN LINERS**

(30) Priority: 01.11.2021 US 202117515944
(71) Applicant: B/E Aerospace, Inc., Winston-Salem, NC 27105 (US)
(72) Inventor: BURD, Peter J.L., Burry Port, SA 16 0RB (GB); HOUGH, Ray, Winston-Salem, 27105 (US)
(74) Representative: Dehns

(57) **Abstract**

A system for aircraft waste includes an aircraft waste bin compartment (202) configured to receive a waste bin (204). An aircraft waste bin (204) is operatively associated with the compartment to be stored in and removed from the compartment. A liner (206) as is secured to an interior surface of the compartment with the liner opening aligned with an opening (208) of the compartment for admitting the waste bin into the liner and compartment. The lines the aircraft waste bin compartment to protect the compartment from waste. The liner is configured to admit the waste bin into and out of the liner and compartment.

## Description

### RELATED APPLICATIONS

This application is a continuation-in-part of U.S. Patent Application Serial No. 17/364,183 filed June 30, 2021 which claims benefit of priority to U.S. Provisional Patent Application No. 63/047,042 filed July 1, 2020.

### BACKGROUND

### 1. Field

The present disclosure relates to aircraft interiors, and more particularly to waste disposal operations for aircraft interiors.

### 2. Description of Related Art

The risk of contamination of viral pathogens such as COVID-19 is increased when potentially contaminated meal service waste is stored in galley waste compartment bins. This can be exasperated if used PPE (personal protective equipment) was also disposed of in this way. When the metallic or plastic compartment bin is full this has to be emptied by an attendant into a bag and the bag must be stowed in any vacant space that can be found, e.g., an empty meal trolley. There is a risk of viral transfer through direct waste and bag contact during this process.

The conventional techniques have been considered satisfactory for their intended purpose. However, there is an ever present need for improved systems and methods for waste disposal within aircraft interiors. This disclosure provides a solution for this need.

### SUMMARY

A liner for an aircraft waste bin compartment includes a liner configured to line an aircraft waste bin compartment to protect the compartment from waste. The liner is configured to admit the waste bin into and out of the liner and compartment.

The liner can include at least one polyimide film welded to form an interior space with an opening defined at one end of the interior space configured for passage of the waste bin into the interior space. The at least one polyimide film and interior space can be dimensioned for use in an aircraft galley waste compartment. The at least one polyimide film and interior space can be dimensioned for use in an aircraft lavatory waste compartment. The at least one polyimide film can include a portion configured for lining an interior surface of a door of the compartment.

The liner can include a draw string extending around the opening, with one or more portions of the draw string exposed for drawing the opening closed. The opening can define a plurality of tie handles configured to be tied together for closure of the opening. The at least one polyimide film can include an adhesive configured to adhere the at least one polyimide film to an interior surface of the compartment. At least one clip can be operatively associated with the at least one polyimide film to secure the at least one polyimide film to an interior surface of the compartment.

A system for aircraft waste includes an aircraft waste bin compartment configured to receive a waste bin. An aircraft waste bin is operatively associated with the compartment to be stored in and removed from the compartment. A liner as described above is secured to an interior surface of the compartment with the liner opening aligned with an opening of the compartment for admitting the waste bin into the liner and compartment.

The compartment can be in an aircraft galley. The compartment can be in an aircraft lavatory. A waste bin liner can be included within the waste bin.

A method of disposing of waste in an aircraft interior includes securing a liner to an interior surface of an aircraft waste bin compartment configured to receive and stow an aircraft waste bin. The method includes collecting waste into the waste bin, removing the waste bin from the compartment, and removing the liner from the interior surface of the aircraft waste bin compartment. The method can include removing waste from the waste bin and disposing of the liner.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a perspective view of a portion of a system constructed in accordance with the present disclosure, showing a waste bin in a galley trolley, with the liner in the bin;
Fig. 2 is an exploded perspective view of the bin of Fig. 1, showing liner exploded out from the bin and showing the draw string for closure of the liner;
Fig. 3 is a perspective view of a bin with another embodiment of a liner, having tie handles for closure;
Fig. 4 is a perspective view of an aircraft galley, showing a bin and liner partially removed from a trolley to show the liner;
Fig. 5 is a front perspective view of another liner embodiment, for use in an aircraft lavatory;
Fig. 6 is a perspective view of the liner of Fig. 1, exploded from a wire support;
Fig. 7 is a perspective view of an aircraft waste bin compartment with a liner for lining the compartment itself in accordance with the present disclosure, showing the liner outside of the compartment;
Fig. 8 is an outside elevation view of the compartment and liner of Fig. 7, showing a waste bin received within the liner and within the compartment;
Fig. 9 is an outside perspective view of the compartment and liner of Fig. 7, showing doors for the compartment, which have respective liner portions on the interior surfaces thereof; and
Fig. 10 is a perspective view of the portion of the compartment and liner identified in Fig. 8, showing how the liner protects the interior surfaces of the compartment from waste.

### DETAILED DESCRIPTION OF THE PREFERRED EMBODIMENTS

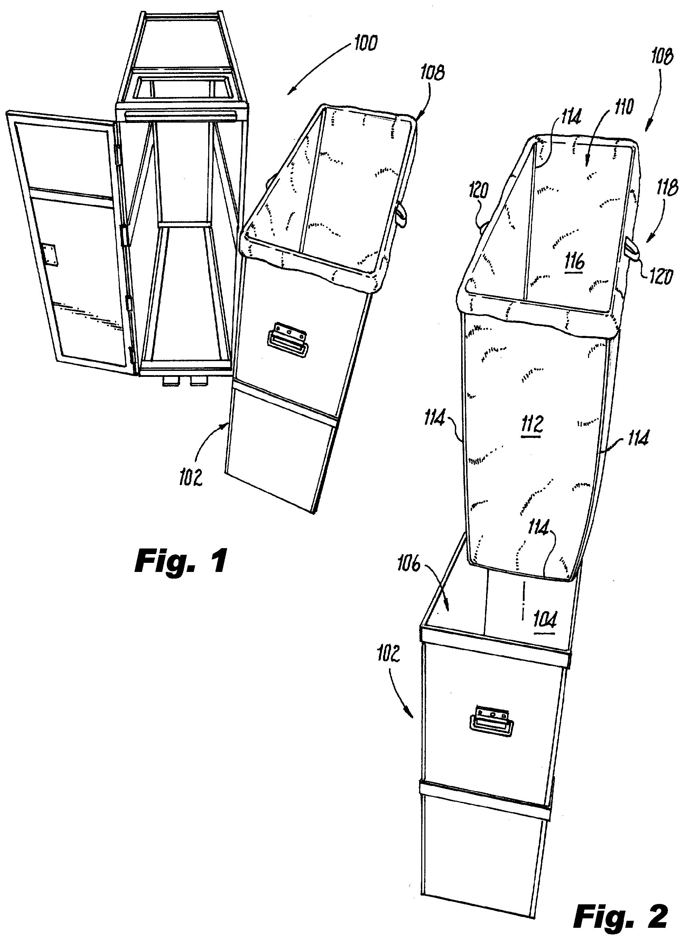

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-10, as will be described. The systems and methods described herein can be used to improve waste disposal within aircraft interiors, e.g. for reduction of transmission of infectious agents and the like.

The system 100 for aircraft waste can include an aircraft waste bin 102 defining a bin interior 104 with a bin opening 106 in one end (reference characters 104 and 106 are labeled in Fig. 2). A liner 108 is seated in the bin interior 104 with the liner opening 110 aligned with the bin opening 106 for receipt of waste, as shown in Fig. 2.

With continued reference to Fig. 2, the liner 108 for an aircraft waste bin includes at least one polyimide film 112 welded, e.g. along weld lines 114, to form an interior space 116 with the liner opening 110 defined at one end of the liner interior space 116 configured for passage of waste into the liner interior space 116.

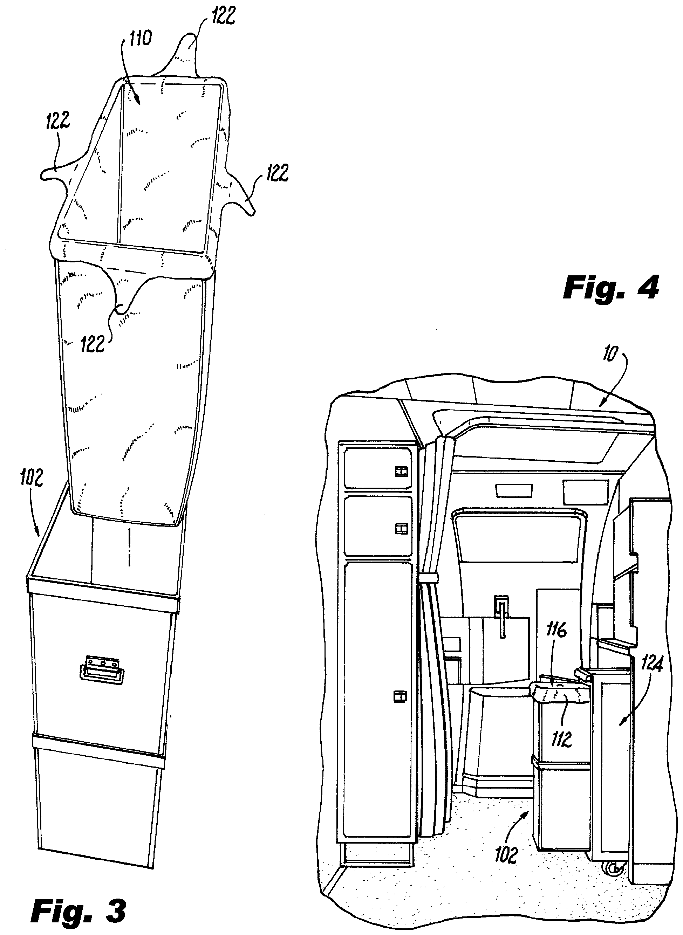

A draw string 118 can extend around the liner opening 110, with one or more portions 120 of the draw string 118 exposed for drawing the liner opening 110 closed. As shown in Fig. 3, it is also contemplated that the liner opening 110 can define a plurality of tie handles 122 configured to be tied together for closure of the liner opening 110.

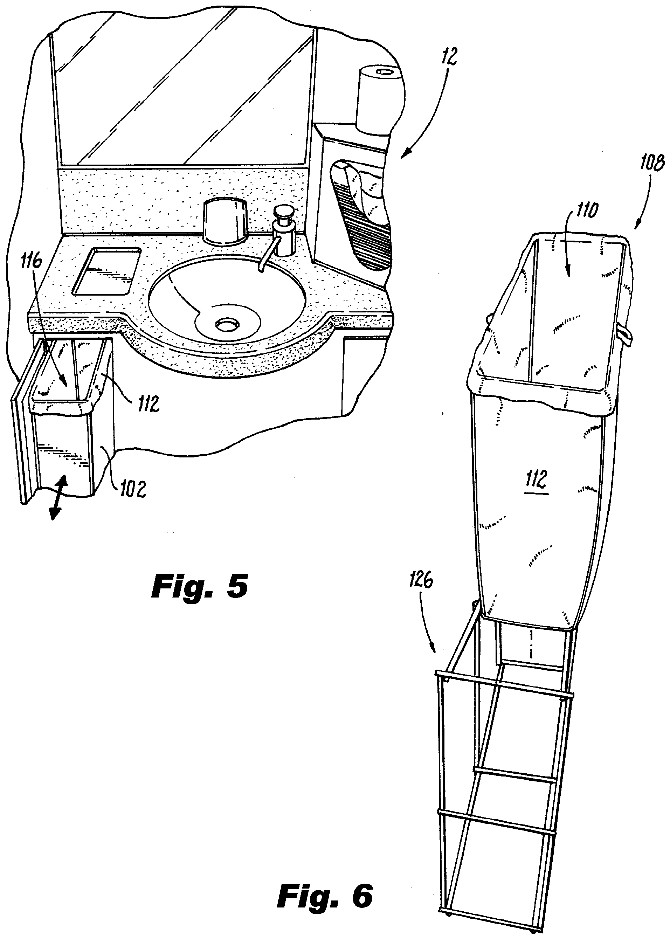

Referring now to Fig. 4, the waste bin 102 can be in an aircraft galley insert or trolley 124 for use in an aircraft galley 10, wherein the at least one polyimide film 112 and liner interior space 116 are dimensioned to substantially fill and conform to the waste bin 102. As shown in Fig. 5, it is also contemplated that the waste bin 102 can be in an aircraft lavatory 12, wherein the at least one polyimide film 112 and liner interior space 116 are dimensioned substantially fill and conform to the waste bin 102 in the aircraft lavatory 12. As shown in Fig. 6, in lieu of or in addition to a bin 102, a wire frame 126 can support the at least one polyimide film 112 with the liner opening 110 held in open position for receipt of waste, e.g. during flight.

With continued reference to Figs. 1-6, a method of disposing of waste in an aircraft interior, e.g. in galley 10, lavatory 12, and/or in an aircraft cabin in general, can include collecting waste into a liner, e.g. liner 108 within a system for aircraft waste, e.g. system 100. The method includes removing the liner from the system for aircraft waste, e.g. with the waste inside the liner rather than dumping the waste from a bin into another receptacle. The method can include closing off an opening of the liner, e.g. opening 110. This can be done e.g. using a draw string 118, tie handles 122, or the like. The method can include emptying the liner, cleaning the liner, and/or reusing the liner, e.g. placing the liner back into the bin 102 or into a different bin 102 of similar dimensions. It is also contemplated that the liner can be recycled after its first use in disposal of waste.

This disclosure provides a fire resistance enhancement (FRE) properties/FRE containment certified for flight polyimide bag or sack, which replaces the compartment bin or lines the compartment itself, e.g. using a wire frame for support. The films 112 can be heat welded together. A potential advantage is keeping the waste isolated once disposed of, and minimizing the flight attendants' secondary contact with potentially contaminated waste or cross contamination from stowage of waste in temporary locations. The polyimide film can be a DuPont Kapton^{®} FN film, available from DuPont de Nemours, Inc. of Wilmington, Delaware.

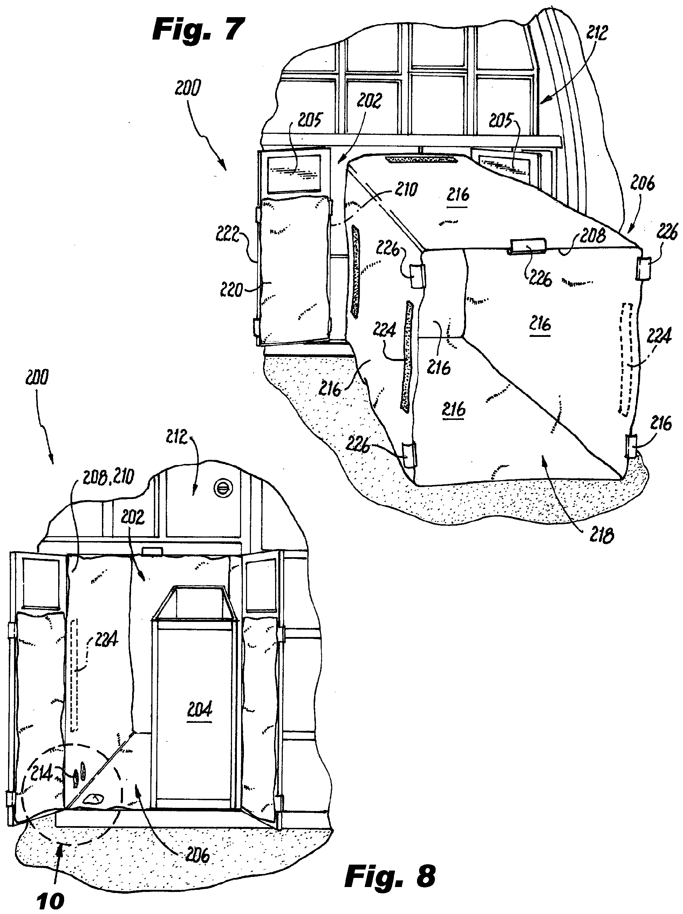

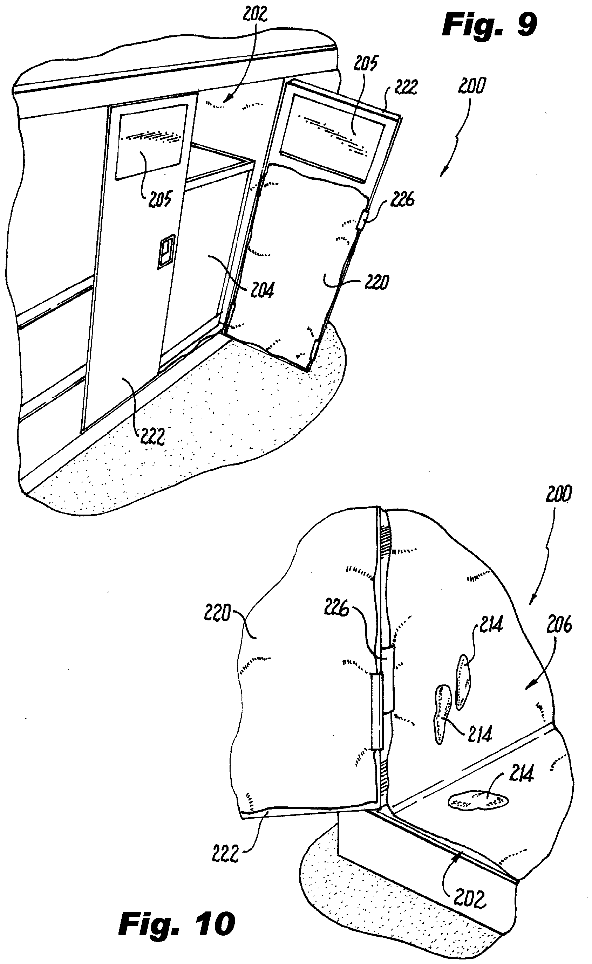

With reference now to Fig. 7, a system 200 for aircraft waste includes an aircraft waste bin compartment 202 configured to receive a waste bin 204. With the waste bin 204 inside the compartment 202, waste can be place into the bin 204 through the flap 205. A liner 206 outside the compartment as shown in Fig. 7 is moved into the compartment 202 as shown in Fig. 8, and can be secured to an interior surface of the compartment with the liner opening 208 aligned with an opening 210 of the compartment for admitting the waste bin 204 into the liner 206 and into the compartment 202. With the liner 202 in place, the aircraft waste bin 204 can be stored in and removed from the compartment 202 as needed, leaving the liner 206 in the compartment 202. The compartment 202 is depicted as in an aircraft galley 212, however those skilled in the art will readily appreciate that the compartment 202 can be in any suitable portion of an aircraft, such as the lavatory as shown in Fig. 5. The liner 206 protects the compartment 202 from waste 214, as shown in Fig 10.

With reference again to Fig. 7, the liner 206 includes at least one polyimide film 216, as described above, welded to form an interior space 218 with the opening 208 defined at one end of the interior space 218, configured for passage of the waste bin 204 into and out of the interior space 218. As shown in Fig. 9, the at least one polyimide film 216 can optionally include one or more portions 220 configured for lining an interior surface of a door 222 of the compartment 202 if there are any.

Referring again to Fig. 7, the liner 206 can optionally include a draw string (not shown in Fig. 7, but see, e.g. the draw string 120 in Fig. 2) extending around the opening 208, with one or more portions of the draw string exposed for drawing the opening closed. Optionally, the opening 208 can define a plurality of tie handles (not depicted in Fig. 7, but see, e.g. the tie handles 122 in Fig. 3) configured to be tied together for closure of the opening 208. The at least one polyimide film 216 can include an adhesive 224 configured to adhere the at least one polyimide film 216 to an interior surface of the compartment 202 as shown in Fig. 8. In addition to or in lieu of the adhesive 224, at least one clip 226 can be operatively associated with the at least one polyimide film 216 to secure the at least one polyimide film 216 to an interior surface of the compartment 202. The at least one polyimide film 216 and interior space 218 are dimensioned for use in an aircraft galley waste compartment, in an aircraft lavatory waste compartment, or any other suitable waste compartment.

A method of disposing of waste in an aircraft interior includes securing a liner, e.g. liner 206, to an interior surface of an aircraft waste bin compartment, e.g. compartment 202, configured to receive and stow an aircraft waste bin, e.g. bin 204, as indicated in Figs. 7-8. The waste bin can have a waste bin liner of its own therein, e.g. the liner 108 as depicted in Fig. 2. The method includes collecting waste into the waste bin, e.g. the waste goes into the liner 108 as in Fig. 2, removing the waste bin from the compartment e.g. as one of the bins 204 of Fig. 9 is removed in Fig. 8, and removing the liner, e.g. the liner 206, from the interior surface of the aircraft waste bin compartment as shown in Fig. 7. The method can include removing waste from the waste bin and disposing of the liner, e.g. placing the used liner 206 from the surfaces of the compartment 202 into the liner 208 inside the waste bin 204 before closing the waste bin liner 108 and removing it from the waste bin 204. Replacing the compartment liner into the compartment prepares the compartment to receive the waste bin again. Using and periodically replacing the compartment liner as described above can maintain the interior surfaces of the waste bin compartment free of accumulated waste.

This disclosure provides a method of receiving and storing potentially contaminated waste in an un-modified galley waste compartment, it reduces the potential risk of infection for the cabin crew and off-aircraft garbage handlers. It also significantly reduces the risk of cross contamination of temporary storage locations. Not only protects against viral infection, but would be generally more hygienic to use, and can provide a weight savings in aircraft. Importantly the material is capable of meeting the airworthiness requirements for FRE containment in an on-aircraft galley waste compartment consistent with U.S. Federal Aviation Regulations, 14 CFR § 25.856(a).

The methods and systems of the present disclosure, as described above and shown in the drawings, provide for waste disposal within aircraft interiors with reduced transmission of infectious agents and other potential benefits as outlined herein. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A liner system (200) for an aircraft waste bin compartment (202) comprising:
a liner (206) configured to line an aircraft waste bin compartment (202) to protect the compartment from waste, and configured to admit a waste bin (204) into and out of the liner and compartment.

2. The liner system as recited in claim 1, wherein the liner (206) includes at least one polyimide film (216) welded to form an interior space (218) with an opening (208) defined at one end of the interior space configured for passage of the waste bin (204) into the interior space.

3. The liner system as recited in claim 2, further comprising a draw string (120) extending around the opening (208), with one or more portions of the draw string exposed for drawing the opening closed.

4. The liner system as recited in claim 2 or 3, wherein the opening (208) defines a plurality of tie handles (122) configured to be tied together for closure of the opening.

5. The liner system as recited in any of claims 2 to 4, wherein the at least one polyimide film (216) and interior space (218) are dimensioned for use in an aircraft galley waste compartment.

6. The liner system as recited in any of claims 2 to 5, wherein the at least one polyimide film (216) and interior space (218) are dimensioned for use in an aircraft lavatory waste compartment.

7. The liner system as recited in any of claims 2 to 6, wherein the at least one polyimide film (216) includes an adhesive configured to adhere the at least one polyimide film to an interior surface of the compartment (202).

8. The liner system as recited in any of claims 2 to 7, further comprising at least one clip (226) operatively associated with the at least one polyimide film (216) to secure the at least one polyimide film to an interior surface of the compartment (202).

9. The liner system as recited in any of claims 2 to 8, wherein the at least one polyimide film (216) includes a portion configured for lining an interior surface of a door (222) of the compartment (202).

10. A system for aircraft waste comprising:
an aircraft waste bin compartment (202) configured to receive a waste bin (204);
an aircraft waste bin (204) operatively associated with the compartment to be stored in and removed from the compartment; and
a liner (206) including at least one polyimide film (216) welded to form a liner interior space (218) with a liner opening (208) defined at one end of the interior space configured for passage of the waste bin into the liner interior space, wherein the liner is secured to an interior surface of the compartment with the liner opening aligned with an opening of the compartment for admitting the waste bin into the liner and compartment.

11. The system as recited in claim 10, wherein the compartment (202) is in an aircraft galley.

12. The system as recited in claim 10, wherein the compartment (202) is in an aircraft lavatory.

13. The system as recited in any of claims 10 to 12, further comprising a waste bin liner (108) within the waste bin (204).

14. A method of disposing of waste in an aircraft interior comprising:
securing a liner to an interior surface of an aircraft waste bin compartment configured to receive and stow an aircraft waste bin;
collecting waste into the waste bin;
removing the waste bin from the compartment; and
removing the liner from the interior surface of the aircraft waste bin compartment.

15. The method as recited in claim 14, further comprising removing waste from the waste bin and disposing of the liner.
